# EUROPEAN PATENT APPLICATION

(11) **EP 4 343 267 A1**
(43) Date of publication of application: **27.03.2024**
(21) Application number: 22196705.2
(22) Date of filing: 20.09.2022
(51) Int. Cl.: F41H 5/04

(54) **LIGHTWEIGHT BALLISTIC GLASSES**

(71) Applicant: SABIC Global Technologies B.V., 4612 PX Bergen op Zoom (NL)
(72) Inventor: ALFAWZAN, ABDULRHMAN MOHAMMAD, 4612 PX Bergen OP Zoom (NL); ALLAFI, WALEED FAHAD, 4612 PX Bergen OP Zoom (NL); ALHAIDARI, MOHANNAD ABULGHAITH, 4612 PX Bergen OP Zoom (NL)
(74) Representative: Watson, Craig Simon

(57) **Abstract**

Lightweight ballistic glasses are provided that provide effective protection from ballistic attack while also being lightweight enough for use in armored vehicles and aircraft. In addition to other embodiments, a multilayered lightweight ballistic glass is provided that meets the CEN 1063 Level BR6 standard, has a weight of no greater than about 75 kilograms per square meter (kg/m²), and a total thickness less than about 40 mm.

## Description

### TECHNICAL FIELD

The present disclosure generally relates to ballistic glasses. More specifically, the present disclosure relates to lightweight ballistic glass that is light enough to be used in armored vehicles and aircraft among other uses.

### BACKGROUND

Ballistic glass, also referred to as bullet-resistant glass, may be used to protect compartments from ballistic attack while also providing adequate light transmission to allow for visual navigation and observation as well as the use of optical or luminary instruments. Non-limiting examples of common compartments that may be protected by ballistic glass are the passenger compartments of armored vehicles and aircraft, including armored helicopters, as well as compartments that house optical instruments or lights, such as the protective compartments surrounding headlights in armored vehicles or aircraft. However, the use of ballistic glass in especially armored vehicles and aircraft is often limited by the weight of the ballistic glass. Accordingly, new lightweight ballistic glasses effective at resisting ballistic attack and suitable for use in weight-sensitive applications such as armored vehicles and aircraft is desirable.

### SUMMARY

To address these shortcomings in the art, Applicant has developed lightweight ballistic glasses operable to effectively mitigate ballistic attack while being lightweight enough for use in armored vehicles and aircraft, as well as in mobile ballistic shields, according to the exemplary embodiments disclosed herein.

Certain embodiments include a lightweight ballistic glass composition. The lightweight ballistic glass may be operable to mitigate a ballistic attack received on an exterior surface of the glass so as to provide protection from ballistic attack to living organisms, objects, or instruments positioned on or adjacent to an interior surface of the ballistic glass. In certain embodiments, the lightweight ballistic glass may be used to protect a compartment, such as the passenger compartments of armored vehicles and aircraft, including armored helicopters, as well as compartments that house optical instruments or lights, such as the protective compartments surrounding headlights in armored vehicles or aircraft. The compartment may also be, for example, a dwelling in need of ballistic protection. In some embodiments, the lightweight ballistic glass may form or otherwise be used in mobile ballistic shields that may be temporarily positioned in front of people, animals, or equipment in need of ballistic protection, but which also needs to be lightweight enough to be carried or otherwise efficiently relocated. In certain embodiments, the provided lightweight ballistic glass may be operable to meet the CEN 1063 Level BR6 standard.

The lightweight ballistic glass may include an exterior side forming an exterior surface of the ballistic glass and an interior side forming an interior surface of the ballistic glass opposite the exterior surface. The exterior surface of the ballistic glass is intended to be positioned so as to face the direction of incoming ballistic attack whereas the interior surface of the ballistic glass is intended to face toward the interior of a compartment intended to be protected from ballistic attack by the ballistic glass. The ballistic glass may include a plurality of borosilicate glass layers and a plurality of exterior aliphatic polyurethane film layers. One of the plurality of borosilicate glass layers may form the exterior surface of the ballistic glass. Each of the plurality of borosilicate glass layers may be separated from an adjacent borosilicate glass layer by at least one of the plurality of exterior aliphatic polyurethane film layers. In some embodiments, each of the plurality of exterior aliphatic polyurethane film layers may be in contact with a surface of at least one of the plurality of borosilicate glass layers.

The ballistic glass may include a polycarbonate sheet having a first surface and a second surface. The second surface of the polycarbonate sheet may form the interior surface of the ballistic glass. The ballistic glass may also include an interior aliphatic polyurethane film layer in contact with the first surface of the polycarbonate sheet. The interior aliphatic polyurethane film layer may be positioned to separate the first surface of the polycarbonate sheet from a surface of a borosilicate glass layer. In at least some instances, the interior aliphatic polyurethane film layer may be in contact with a surface of a borosilicate glass layer.

Each of the plurality of exterior aliphatic polyurethane film layers used in the ballistic glass may have a thickness of less than 2 millimeters (mm). In at least some embodiments, each of the plurality of exterior aliphatic polyurethane film layers may have a thickness of from about 0.5 mm to about 1.5 mm, or from about 0.5 mm to about 0.75 mm, or from about 0.60 mm to about 0.65 mm. The interior aliphatic polyurethane film layer may also have a thickness of less than 2 mm. In at least some embodiments, the interior aliphatic polyurethane film layer may be thicker than each of the exterior aliphatic polyurethane film layers. For example, in at least some embodiments, the interior aliphatic polyurethane film layer may have a thickness of from about 1.1 mm to about 1.4 mm, or from about 1.0 mm to about 1.5 mm, or from about 1.2 mm to about 1.3 mm, or from about 1.25 mm to about 1.30 mm. In some embodiments, the exterior and interior aliphatic polyurethane film layers may be the same material.

In at least some embodiments, the polycarbonate sheet in the ballistic glass may have a thickness of from about 4.0 mm to about 5.0 mm, or from about 4.25 mm to about 4.75 mm, or from about 3.5 mm to about 5.5 mm, or from about 3.0 mm to about 6.0 mm. In at least some embodiments, the polycarbonate sheet is a hard-coated polycarbonate sheet.

In at least some embodiments, at least one of the plurality of borosilicate glass layers used in the ballistic glass may have a thickness of from about 2 mm to about 15 mm, or from about 3 mm to about 13 mm, or from about 4 mm to about 12 mm. In some embodiments, each of the plurality of borosilicate glass layers may have a thickness of from about 2 mm to about 15 mm, or from about 3 mm to about 13 mm, or from about 4 mm to about 12 mm. In some embodiments, each of the plurality of borosilicate glass layers may have a thickness of from about 3 mm to about 5 mm or from about 11 mm to about 13 mm. In other embodiments, each of the plurality of borosilicate glass layers may have a thickness of from about 2 mm to about 6 mm or from about 10 mm to about 15 mm. In still other embodiments, each of the plurality of borosilicate glass layers may have a thickness of from about 3.5 mm to about 4.5 mm or from about 11.5 mm to about 12.5 mm.

In some embodiments, the lightweight ballistic glass may comprise no more than four borosilicate glass layers or may comprise a total of four borosilicate glass layers. In such embodiments, each of the plurality of borosilicate glass layers may have a thickness of from about 3 mm to about 5 mm or from about 11 mm to about 13 mm. In other embodiments, each of the plurality of borosilicate glass layers may have a thickness of from about 2 mm to about 6 mm or from about 10 mm to about 15 mm. In still other embodiments, each of the plurality of borosilicate glass layers may have a thickness of from about 3.5 mm to about 4.5 mm or from about 11.5 mm to about 12.5 mm.

In some embodiments, the ballistic glass may include two borosilicate glass layers each having a thickness from about 3 mm to about 5 mm and two borosilicate glass layers each having a thickness from about 11 mm to about 13 mm. In other embodiments, the ballistic glass may include two borosilicate glass layers each having a thickness of from about 2 mm to about 6 mm and two borosilicate glass layers each having a thickness of from about 10 mm to about 15 mm. In still other embodiments, the ballistic glass may include two borosilicate glass layers each having a thickness of from about 3.5 mm to about 4.5 mm and two borosilicate glass layers each having a thickness of from about 11.5 mm to about 12.5 mm.

Each or any one of the plurality of borosilicate glass layers used in the ballistic glass may be a borosilicate glass type 3.3 as specified in international standards ISO 3585 and EN 1748 T1. In at least some embodiments, each or any one of the plurality of borosilicate glass layers may comprise from about 12% to about 14% by weight B₂O₃ and from about 80% to about 82% by weight SiO₂. Each or any one of the plurality of borosilicate glass layers may also comprise from about 3% to about 5% by weight Na₂O or K₂O and from about 1% to about 3% by weight Al₂O₃.

In some embodiments, the lightweight ballistic glass may include a first borosilicate glass layer forming the exterior surface of the lightweight ballistic glass. The first borosilicate glass layer may have a thickness of from about 3.5 mm to about 4.5 mm, or from about 3 mm to about 5 mm, or from about 2 mm to about 6 mm. The ballistic glass may also include a second borosilicate glass layer separated from the first borosilicate glass layer by a first aliphatic polyurethane film layer. The second borosilicate glass layer may have a thickness from about 11.5 mm to about 12.5 mm, or from about 10 mm to about 15 mm, or from about 11 mm to about 13 mm. The ballistic glass may further include a third borosilicate glass layer separated from the second borosilicate glass layer by a second aliphatic polyurethane film layer. The third borosilicate glass layer may have a thickness from about 11.5 mm to about 12.5 mm, or from about 10 mm to about 15 mm, or from about 11 mm to about 13 mm. The ballistic glass may further include a fourth borosilicate glass layer separated from the third borosilicate glass layer by a third aliphatic polyurethane film layer. The fourth borosilicate glass layer may have a thickness from about 3.5 mm to about 4.5 mm, or from about 3 mm to about 5 mm, or from about 2 mm to about 6 mm.

The ballistic glass may further include a polycarbonate sheet forming the interior surface of the lightweight ballistic glass and separated from the fourth borosilicate glass layer by a fourth aliphatic polyurethane film layer. The fourth aliphatic polyurethane film layer forms the interior aliphatic polyurethane film layer described above. The first, second, and third aliphatic polyurethane film layers forms an exterior aliphatic polyurethane film layer described above.

The polycarbonate sheet used in the ballistic glass may have a thickness of from about 4.0 mm to about 5.0 mm, or from about 4.25 mm to about 4.75 mm, or from about 3.5 mm to about 5.5 mm, or from about 3.0 mm to about 6.0 mm. The first, second, and third aliphatic polyurethane film layers may have a thickness that is less than about 2 mm or from about 0.5 mm to about 1.5 mm, or from about 0.5 mm to about 0.75 mm, or from about 0.60 mm to about 0.65 mm. The fourth aliphatic polyurethane film layer may have a thickness that is less than 2 mm or from about 1.1 mm to about 1.4 mm, or from about 1.0 mm to about 1.5 mm, or from about 1.2 mm to about 1.3 mm, or from about 1.25 mm to about 1.30 mm.

The first aliphatic polyurethane film layer used in the ballistic glass may be in direct contact with the first borosilicate glass layer and the second borosilicate glass layer. Likewise, the second aliphatic polyurethane film layer may be in direct contact with the second borosilicate glass layer and the third borosilicate glass layer, while the third aliphatic polyurethane film layer may be in direct contact with the third borosilicate glass layer and the fourth borosilicate glass layer, and the fourth aliphatic polyurethane film layer may be in direct contact with the fourth borosilicate glass layer and the polycarbonate sheet.

The lightweight ballistic glass may have a total thickness of less than about 40 mm, or less than about 41 mm, or less than about 42 mm, or less than about 43 mm, or less than about 45 mm, or less than about 48 mm, or less than about 50 mm. The lightweight ballistic glass may be operable to meet the CEN 1063 Level BR6 standard. In particular, the lightweight ballistic glass may be operable to stop three impacts of a 7.62x51mm NATO round occurring within 120 mm of each other at a range of 10.00 ± 0.5 meters, the 7.62x51mm NATO round having a full metal jacket, pointed bullet, or soft lead core projectile having a weight of 9.5 ± 0.1 grams, and when fired having a projectile velocity of 830 ±10 m/s resulting in an impact energy of 3270 Joules. In such instances, the lightweight ballistic glass may be operable to produce no observable spalls after each impact.

In some embodiments, the lightweight ballistic glass may have a weight of no greater than about 75 kilograms per square meter (kg/m²) of exterior surface or interior surface. In some embodiments, the lightweight ballistic glass may have a weight of about 75 kg/m² of exterior surface or interior surface. In other embodiments, the lightweight ballistic glass may have a weight from about 72 kg/m² of exterior surface or interior surface to about 78 kg/m², or from about 70 kg/m² of exterior surface or interior surface to about 80 kg/m², or from about 74 kg/m² of exterior surface or interior surface to about 76 kg/m².
In certain embodiments, a method of manufacturing a multi-layered lightweight ballistic glass is provided. The method may include assembling a multi-layered structure comprising: a first borosilicate glass layer forming the exterior surface of the lightweight ballistic glass, the first borosilicate glass layer having a thickness from about 3.5 mm to about 4.5 mm; a second borosilicate glass layer separated from the first borosilicate glass layer by a first aliphatic polyurethane film layer, the second borosilicate glass layer having a thickness from about 11.5 mm to about 12.5 mm; a third borosilicate glass layer separated from the second borosilicate glass layer by a second aliphatic polyurethane film layer, the third borosilicate glass layer having a thickness from about 11.5 mm to about 12.5 mm; a fourth borosilicate glass layer separated from the third borosilicate glass layer by a third aliphatic polyurethane film layer, the fourth borosilicate glass layer having a thickness from about 3.5 mm to about 4.5 mm; and a polycarbonate sheet forming the interior surface of the lightweight ballistic glass and separated from the fourth borosilicate glass layer by a fourth aliphatic polyurethane film layer, the polycarbonate sheet having a thickness from about 4.0 mm to about 5.0 mm; wherein the first, second, and third aliphatic polyurethane film layers have a thickness from about 0.60 mm to about 0.65 mm and the fourth aliphatic polyurethane film layer has a thickness of from about 1.1 mm to about 1.4 mm. The method may also include (1) applying a cold vacuum to the multi-layered structure in order to remove air from interlayer regions between adjacent borosilicate glass layers or an adjacent borosilicate glass layer and a polycarbonate sheet, the interlayer regions comprising an aliphatic polyurethane film layer; (2) heating the multi-layered structure in order to cause the aliphatic polyurethane film layers to melt thereby bonding together adjacent borosilicate glass layers or an adjacent borosilicate glass layer and a polycarbonate sheet; (3) applying a hot vacuum to the multi-layered structure in order to remove additional remaining air from the interlayer regions; (4) cooling the multi-layered structure to an ambient temperature; and (5) removing the vacuum to produce the multi-layered lightweight ballistic glass.

Still other aspects and advantages of these exemplary embodiments and other embodiments, are discussed in detail herein. Moreover, it is to be understood that both the foregoing information and the following detailed description provide merely illustrative examples of various aspects and embodiments, and are intended to provide an overview or framework for understanding the nature and character of the claimed aspects and embodiments. Accordingly, these and other objects, along with advantages and features of the present disclosure, will become apparent through reference to the following description and the accompanying drawings. Furthermore, it is to be understood that the features of the various embodiments described herein are not mutually exclusive and may exist in various combinations and permutations.

### BRIEF DESCRIPTION OF THE DRAWINGS

The accompanying drawings, which are included to provide a further understanding of the embodiments of the present disclosure, are incorporated in and constitute a part of this specification, illustrate embodiments of the present disclosure, and together with the detailed description, serve to explain principles of the embodiments discussed herein. No attempt is made to show structural details of this disclosure in more detail than may be necessary for a fundamental understanding of the embodiments discussed herein and the various ways in which they may be practiced. According to common practice, the various features of the drawings discussed below are not necessarily drawn to scale. Dimensions of various features and elements in the drawings may be expanded or reduced to illustrate embodiments of the disclosure more clearly.
**FIG. 1** is a graphical representation of a lightweight ballistic glass, according to an exemplary embodiment of the present disclosure.
**FIG. 2** is a graphical representation of an exemplary lightweight ballistic glass operable to meet the CEN 1063 Level BR6 standard constructed and tested according to Example 1, according to an exemplary embodiment of the present disclosure.

### DETAILED DESCRIPTION

The present disclosure describes various embodiments related to lightweight ballistic glasses as well as methods of manufacturing lightweight ballistic glasses. Further embodiments may be described and disclosed.

In the following description, numerous details are set forth in order to provide a thorough understanding of the various embodiments. In other instances, well-known processes, devices, and systems may not have been described in particular detail in order not to unnecessarily obscure the various embodiments. Additionally, illustrations of the various embodiments may omit certain features or details in order to not obscure the various embodiments.

The description may use the phrases "in some embodiments," "in various embodiments," "in an embodiment," or "in embodiments," which may each refer to one or more of the same or different embodiments. Furthermore, the terms "comprising," "including," "having," and the like, as used with respect to embodiments of the present disclosure, are synonymous.

The term "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "reducing," "reduced," or any variation thereof, when used in the claims and/or the specification includes any measurable decrease or complete inhibition to achieve a desired result.

The use of the words "a" or "an" when used in conjunction with any of the terms "comprising," "including," "containing," or "having," in the claims or the specification may mean "one," but it is also consistent with the meaning of "one or more," "at least one," and "one or more than one." The terms "wt.%", "vol.%", or "mol.%" refers to a weight, volume, or molar percentage of a component, respectively, based on the total weight, the total volume of material, or total moles, that includes the component. In a non-limiting example, 10 grams of component in 100 grams of the material is 10 wt.% of component.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

Disclosed here are lightweight ballistic glasses as well as methods of manufacturing or assembling such lightweight ballistic glasses. In particular, the Applicant has discovered that the application of multiple layers of borosilicate glass separated by high tenacity polyurethane interlayers, in the arrangement and thicknesses provided in the present disclosure, increases the elasticity and Young's modulus of the glass resulting in effective ballistic attack mitigation while being still lightweight enough to be deployed in armored vehicles which require reduced payload weights and increased maneuverability. The presently disclosed multi-layer ballistic glasses include high-strength polycarbonate sheets and lightweight borosilicate glass layers, providing increased hardness and strength, as well as high tenacity polyurethane interlayers, in particular thicknesses and arrangements that have been unexpectedly discovered to minimize weight while providing desirable resistance to ballistic attack.

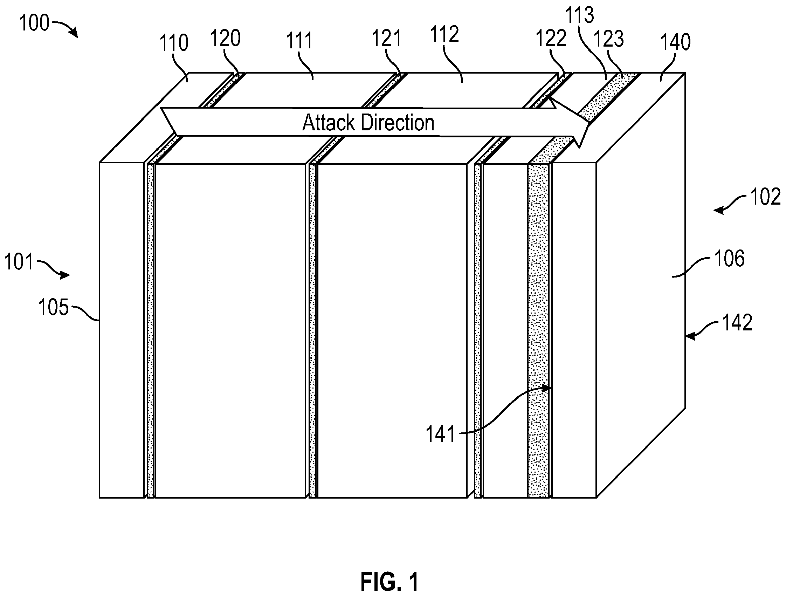

**FIG. 1** is a schematic depicting a lightweight ballistic glass **100,** according to an exemplary embodiment of the present disclosure. As depicted in **FIG. 1****,** lightweight ballistic glass **100** may include an exterior side **101** comprising an exterior surface **105** of the ballistic glass **100** and an interior side **102** comprising an interior surface **106** of the ballistic glass opposite the exterior surface **105.** The exterior surface **105** of the ballistic glass **100** is intended to be positioned so as to face the direction of incoming ballistic attack whereas the interior surface **106** of the ballistic glass **100** is intended to face toward the interior of a compartment intended to be protected from ballistic attack by the ballistic glass. Non-limiting examples of compartments that may be protected by lightweight ballistic glass **100** are the passenger compartments of armored vehicles and aircraft, including armored helicopters, as well as compartments that house optical instruments or lights, such as the protective compartments surrounding headlights in armored vehicles or aircraft. The compartment may also be, for example, a dwelling in need of ballistic protection. The presently disclosed lightweight ballistic glasses may also take the form of a mobile ballistic shield that may be temporarily positioned in front of people, animals, or equipment in need of ballistic protection but which also needs to be lightweight enough to be carried or otherwise efficiently relocated, while still allowing visual observation through the glass.

As depicted in **FIG. 1****,** ballistic glass **100** may include a plurality of borosilicate glass layers, such as borosilicate layers **110, 111, 112, 113** and a plurality of exterior aliphatic polyurethane film layers, such as exterior aliphatic polyurethane film layers **120, 121, 122.** Each of the plurality of borosilicate glass layers **110, 111, 112, 113** may be separated from an adjacent borosilicate glass layer by at least one of the plurality of exterior aliphatic polyurethane film layers **120, 121, 122.** As shown in **FIG. 1****,** each of the plurality of exterior aliphatic polyurethane film layers is in contact with a surface of at least one of the plurality of borosilicate glass layers.

Ballistic glass **100** may include a polycarbonate sheet **140** having a first surface **141** and a second surface **142.** The second surface **142** of the polycarbonate sheet **140** forms the interior surface **102** of the ballistic glass **100.** Ballistic glass **100** may also include an interior aliphatic polyurethane film layer **123** in contact with the first surface **141** of the polycarbonate sheet **140.** The interior aliphatic polyurethane film layer **123** is positioned to separate the first surface **141** of the polycarbonate sheet **140** from a surface of a borosilicate glass layer, such as borosilicate glass layer **113.** In at least some instances, the interior aliphatic polyurethane film layer **123** may be in contact with a surface of a borosilicate glass layer, such as borosilicate glass layer **113.**

Each of the plurality of exterior aliphatic polyurethane film layers **120, 121, 122** may have a thickness of less than 2 millimeters (mm). In at least some embodiments, each of the plurality of exterior aliphatic polyurethane film layers **120, 121, 122** may have a thickness of from about 0.5 mm to about 1.5 mm, or from about 0.5 mm to about 0.75 mm, or from about 0.60 mm to about 0.65 mm. The interior aliphatic polyurethane film layer **123** may also have a thickness of less than 2 mm. In at least some embodiments, the interior aliphatic polyurethane film layer **123** may be thicker than each of the exterior aliphatic polyurethane film layers **120, 121, 122.** For example, in at least some embodiments, the interior aliphatic polyurethane film layer **123** may have a thickness of from about 1.1 mm to about 1.4 mm, or from about 1.0 mm to about 1.5 mm, or from about 1.2 mm to about 1.3 mm, or from about 1.25 mm to about 1.30 mm. In some embodiments, the exterior **120, 121, 122** and interior aliphatic polyurethane film layers **123** may be the same material. In some instances, the exterior **120, 121, 122** and interior aliphatic polyurethane film layers **123** may include appropriate aliphatic polyurethane films, such as those manufactured by American Polyfilm Inc., PPG Aerospace Transparent Armor and Specialty Products, Polymar, Armor Aerospace Inc., or Argotec, Inc.

In at least some embodiments, the polycarbonate sheet **140** may have a thickness of from about 4.0 mm to about 5.0 mm, or from about 4.25 mm to about 4.75 mm, or from about 3.5 mm to about 5.5 mm, or from about 3.0 mm to about 6.0 mm. In some embodiments, the polycarbonate sheet **140** is a hard-coated polycarbonate sheet. In some embodiments, the polycarbonate sheet **140** is any ballistic grade polycarbonate sheet. In certain embodiments, the polycarbonate sheet includes the Lexan HLG-5 manufactured by SABIC Innovative Plastics (USA).

In at least some embodiments, at least one of the plurality of borosilicate glass layers **110, 111, 112, 113** may have a thickness of from about 2 mm to about 15 mm, or from about 3 mm to about 13 mm, or from about 4 mm to about 12 mm. In some embodiments, each of the plurality of borosilicate glass layers **110, 111, 112, 113** may have a thickness of from about 2 mm to about 15 mm, or from about 3 mm to about 13 mm, or from about 4 mm to about 12 mm. In some embodiments, each of the plurality of borosilicate glass layers **110, 111, 112, 113** may have a thickness of from about 3 mm to about 5 mm or from about 11 mm to about 13 mm. In other embodiments, each of the plurality of borosilicate glass layers **110, 111, 112, 113** may have a thickness of from about 2 mm to about 6 mm or from about 10 mm to about 15 mm. In still other embodiments, each of the plurality of borosilicate glass layers **110, 111, 112, 113** may have a thickness of from about 3.5 mm to about 4.5 mm or from about 11.5 mm to about 12.5 mm.

In some embodiments, lightweight ballistic glass **100** may comprise no more than four borosilicate glass layers, such as borosilicate glass layers **110, 111, 112, 113** shown in **FIG. 1****.** In such embodiments, each of the plurality of borosilicate glass layers may have a thickness of from about 3 mm to about 5 mm or from about 11 mm to about 13 mm. In other embodiments, each of the plurality of borosilicate glass layers may have a thickness of from about 2 mm to about 6 mm or from about 10 mm to about 15 mm. In still other embodiments, each of the plurality of borosilicate glass layers may have a thickness of from about 3.5 mm to about 4.5 mm or from about 11.5 mm to about 12.5 mm.

In some embodiments, lightweight ballistic glass **100** may comprise a total of four borosilicate glass layers, such as borosilicate glass layers **110, 111, 112, 113** shown in **FIG. 1****.** In such embodiments, each of the plurality of borosilicate glass layers may have a thickness of from about 3 mm to about 5 mm or from about 11 mm to about 13 mm. In other embodiments, each of the plurality of borosilicate glass layers may have a thickness of from about 2 mm to about 6 mm or from about 10 mm to about 15 mm. In still other embodiments, each of the plurality of borosilicate glass layers may have a thickness of from about 3.5 mm to about 4.5 mm or from about 11.5 mm to about 12.5 mm.

In some embodiments, ballistic glass **100** may include two borosilicate glass layers each having a thickness from about 3 mm to about 5 mm and two borosilicate glass layers each having a thickness from about 11 mm to about 13 mm. In other embodiments, ballistic glass **100** may include two borosilicate glass layers each having a thickness of from about 2 mm to about 6 mm and two borosilicate glass layers each having a thickness of from about 10 mm to about 15 mm. In still other embodiments, ballistic glass **100** may include two borosilicate glass layers each having a thickness of from about 3.5 mm to about 4.5 mm and two borosilicate glass layers each having a thickness of from about 11.5 mm to about 12.5 mm.

Each or any one of the plurality of borosilicate glass layers **110, 111, 112, 113** may be a borosilicate glass type 3.3 as specified in international standards ISO 3585 and EN 1748 T1. In at least some embodiments, each or any one of the plurality of borosilicate glass layers may comprise from about 12% to about 14% by weight B₂O₃ and from about 80% to about 82% by weight SiO₂. Each or any one of the plurality of borosilicate glass layers may also comprise from about 3% to about 5% by weight Na₂O or K₂O and from about 1% to about 3% by weight Al₂O₃. In some embodiments, each or any one of the plurality of borosilicate glass layers may be Borofloat-33 manufactured by Schott North America Inc. or Bolite-33 manufactured by Armor Aerospace Inc. or similar glass layers manufactured by Mil-Spec Industries, PPG Industries, or Oldcastle Glass.

As depicted in **FIG. 1****,** lightweight ballistic glass **100** may include a first borosilicate glass layer **110** forming the exterior surface **101** of the lightweight ballistic glass **100.** The first borosilicate glass layer **110** may have a thickness of from about 3.5 mm to about 4.5 mm, or from about 3 mm to about 5 mm, or from about 2 mm to about 6 mm. Ballistic glass **100** may also include a second borosilicate glass layer **111** separated from the first borosilicate glass layer **110** by a first aliphatic polyurethane film layer **120.** The second borosilicate glass layer **111** may have a thickness from about 11.5 mm to about 12.5 mm, or from about 10 mm to about 15 mm, or from about 11 mm to about 13 mm. Ballistic glass **100** may further include a third borosilicate glass layer **112** separated from the second borosilicate glass layer **111** by a second aliphatic polyurethane film layer **121.** The third borosilicate glass layer **112** may have a thickness from about 11.5 mm to about 12.5 mm, or from about 10 mm to about 15 mm, or from about 11 mm to about 13 mm. Ballistic glass **100** may further include a fourth borosilicate glass layer **113** separated from the third borosilicate glass layer **112** by a third aliphatic polyurethane film layer **122.** The fourth borosilicate glass layer **113** may have a thickness from about 3.5 mm to about 4.5 mm, or from about 3 mm to about 5 mm, or from about 2 mm to about 6 mm.

Ballistic glass **100** may further include a polycarbonate sheet **140** forming the interior surface **102** of the lightweight ballistic glass **100** and separated from the fourth borosilicate glass layer **113** by a fourth aliphatic polyurethane film layer **123.** The fourth aliphatic polyurethane film layer **123** forms the interior aliphatic polyurethane film layer **123** described above. The first, second, and third aliphatic polyurethane film layers **120, 121, 122** form a respective one of the exterior aliphatic polyurethane film layers **120, 121, 122** described above.

The polycarbonate sheet **140** may have a thickness of from about 4.0 mm to about 5.0 mm, or from about 4.25 mm to about 4.75 mm, or from about 3.5 mm to about 5.5 mm, or from about 3.0 mm to about 6.0 mm. The first, second, and third aliphatic polyurethane film layers **120, 121, 122** may have a thickness that is less than about 2 mm or from about 0.5 mm to about 1.5 mm, or from about 0.5 mm to about 0.75 mm, or from about 0.60 mm to about 0.65 mm. The fourth aliphatic polyurethane **123** film layer may have a thickness that is less than 2 mm or from about 1.1 mm to about 1.4 mm, or from about 1.0 mm to about 1.5 mm, or from about 1.2 mm to about 1.3 mm, or from about 1.25 mm to about 1.30 mm.

As shown in **FIG. 1****,** the first aliphatic polyurethane film layer **120** may be in direct contact with the first borosilicate glass layer **110** and the second borosilicate glass layer **111,** the second aliphatic polyurethane film layer **121** may be in direct contact with the second borosilicate glass layer **111** and the third borosilicate glass layer **112,** the third aliphatic polyurethane film layer **122** may be in direct contact with the third borosilicate glass layer **112** and the fourth borosilicate glass layer **113,** and the fourth aliphatic polyurethane film layer **123** may be in direct contact with the fourth borosilicate glass layer **113** and the polycarbonate sheet **140.**

Lightweight ballistic glass **100** may have a total thickness of less than about 40 mm, or less than about 42 mm, or less than about 45 mm, or less than about 50 mm. The lightweight ballistic glass **100** depicted in **FIG. 1** is operable to meet the CEN 1063 Level BR6 standard. In particular, the lightweight ballistic glass **100** is operable to stop three impacts of a 7.62x51mm NATO round occurring within 120 mm of each other at a range of 10.00 ± 0.5 meters, the 7.62x51mm NATO round having a full metal jacket, pointed bullet, or soft lead core projectile having a weight of 9.5 ± 0.1 grams, and when fired having a projectile velocity of 830 ±10 m/s resulting in an impact energy of 3270 Joules. In such instances, the lightweight ballistic glass is operable to produce no observable spalls after each impact.

In some embodiments, the lightweight ballistic glass **100** may have a weight of no greater than about 75 kilograms per square meter (kg/m²) of exterior surface or interior surface. In some embodiments, the lightweight ballistic glass **100** may have a weight of about 75 kg/m² of exterior surface or interior surface. In other embodiments, the lightweight ballistic glass **100** may have a weight from about 72 kg/m² of exterior surface or interior surface to about 78 kg/m², or from about 70 kg/m² of exterior surface or interior surface to about 80 kg/m², or from about 74 kg/m² of exterior surface or interior surface to about 76 kg/m².

In at least some embodiments, the aliphatic polyurethane film layers may be operable to bind adjacent borosilicate glass layers and/or an adjacent borosilicate glass layer and a polycarbonate sheet. In particular, the aliphatic polyurethane film layers may be configured to melt when exposed to heat, thereby bonding to an adjacent borosilicate glass layer or polycarbonate sheet resulting in a bonded multilayer structure comprising borosilicate glass layers and polycarbonate sheets bound by an interlayer comprising an aliphatic polyurethane film layer.

In at least some embodiments, each of the layers or sheets in lightweight ballistic glass 100 may be adhered to an adjacent layer or sheet by an interfacial layer of adhesive. In some instances, the interfacial layer of adhesive may be a high-performance adhesive or synthetic resin. In some embodiments, the interfacial layer of adhesive may be selected from the group consisting of an epoxy, polyurethane, and polyvinyl butyral (PVB) resin. As used herein, the term "in contact," in all of its forms, refers to a layer or sheet that is directly in contact with an adjacent layer or sheet or that is be "in contact" with the adjacent layer or sheet via an interfacial layer of adhesive. For example, a polycarbonate sheet or borosilicate glass layer may be in contact with an aliphatic polyurethane film even though they are adhered to the film by an interfacial layer of adhesive.

In other embodiments, the aliphatic polyurethane film layers may be operable to adhere adjacent borosilicate glass or polycarbonate sheets to one another. In such instances, no other interfacial layer of adhesive may be needed to adhere a borosilicate glass layer or a polycarbonate sheet to an adjacent borosilicate layer or polycarbonate sheet. It has been discovered by the Applicant that the thickness and arrangement of the interfacial aliphatic polyurethane film layers can be especially important in determining the ballistic performance of the lightweight ballistic glass **100** as well as the ability to produce ballistic glasses that are both effective at mitigating ballistic attack and sufficiently lightweight for applications requiring reduced weight, such as use in armored vehicles and helicopters.

### EXAMPLES

The example provided below illustrates selected aspects of the various embodiments of lightweight ballistic glass and methods of making the same.

### Example 1

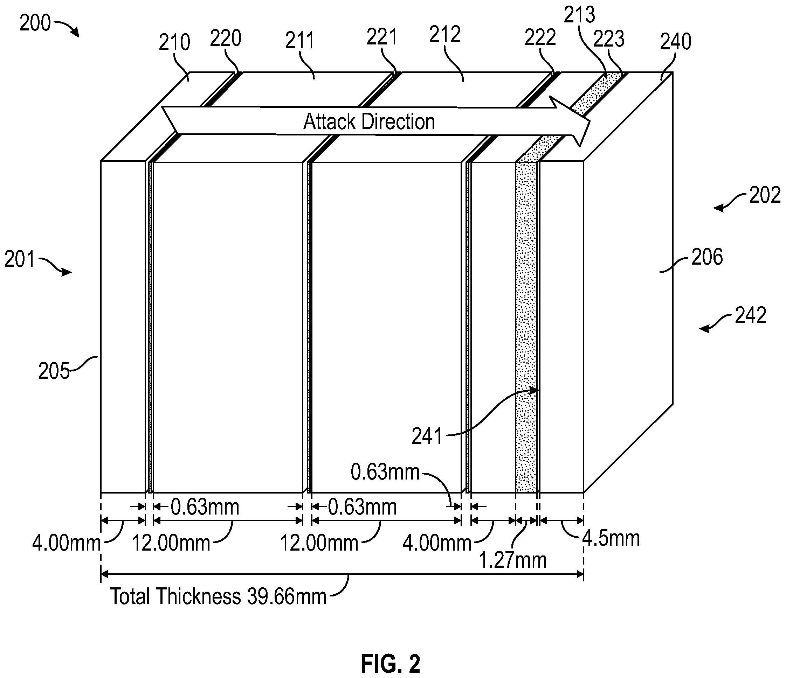

**FIG. 2** depicts an exemplary embodiment of lightweight ballistic glass **200** operable to meet the CEN 1063 Level BR6 standard. As described above, other embodiments of ballistic glass are possible, including other embodiments operable to meet the CEN 1063 Level BR6 standard. As depicted in **FIG. 2****,** lightweight ballistic glass **200** includes an exterior side **201** having an exterior surface **205** of the ballistic glass **200** and an interior side **202** comprising an interior surface **206** of the ballistic glass opposite the exterior surface **205.** The BR6 lightweight ballistic glass **200** depicted in **FIG. 2** includes a first borosilicate glass layer **210** forming the exterior surface **205** and/or exterior side **201** of the lightweight ballistic glass **200.** The first borosilicate glass layer **210** has a thickness of 4.00 mm. The ballistic glass **200** also includes a second borosilicate glass layer **211** separated from the first borosilicate glass layer **210** by a first aliphatic polyurethane film layer **220.** The second borosilicate glass layer **211** has a thickness of 12.00 mm. The ballistic glass **200** example further includes a third borosilicate glass layer **212** separated from the second borosilicate glass layer **211** by a second aliphatic polyurethane film layer **221.** The third borosilicate glass layer **212** has a thickness of 12.00 mm. The ballistic glass **200** example depicted in **FIG. 2** further includes a fourth borosilicate glass layer **213** separated from the third borosilicate glass layer **212** by a third aliphatic polyurethane film layer **222.** The fourth borosilicate glass layer **213** has a thickness of 4.00 mm.

The ballistic glass **200** example further includes a polycarbonate sheet **240** forming the interior surface **206** and/or interior side **202** of the lightweight ballistic glass **200** and separated from the fourth borosilicate glass layer **213** by a fourth aliphatic polyurethane film layer **223.** The polycarbonate sheet **240** in Example 1, depicted in **FIG. 2****,** has a thickness of 4.5 mm. The first, second, and third aliphatic polyurethane film layers **220, 221, 222** have a thickness of 0.63 mm while the fourth aliphatic polyurethane film layer **223** (e.g., the interior aliphatic polyurethane film layer **223)** has a thickness of 1.27 mm. The total thickness of the BR6 ballistic glass depicted in **FIG. 2** is 39.66 mm. The BR6 ballistic glass depicted in **FIG. 2** was also measured to have a weight of 75 kilograms per square meter (kg/m²) of exterior surface or interior surface.

The first, second, third, and fourth borosilicate glass layers **210, 211, 212, 213** can be made of Borofloat-33 borosilicate glass produced by Schott North America Inc. or Bolite-33 borosilicate glass manufactured by Armor Aerospace Inc. or similar glass layers manufactured by Mil-Spec Industries, PPG Industries, or Oldcastle Glass. Polycarbonate sheet **240** is a hard-coated polycarbonate sheet or a ballistic grade polycarbonate sheet. In certain embodiments, the polycarbonate sheet includes the Lexan HLG-5 manufactured by SABIC Innovative Plastics (USA). Each of the aliphatic polyurethane film layer **220, 221, 222, 223** can be one or more aliphatic polyurethane film layers manufactured by companies, such as by American Polyfilm Inc., PPG Aerospace Transparent Armor and Specialty Products, Polymar, Armor Aerospace Inc., or Argotec, Inc.

Lightweight ballistic glass 200 was assembled by cutting the borosilicate glass layers, polycarbonate sheets, and polyurethane film layers, having the thicknesses described above, to the desired shape and dimensions for assembly. After the borosilicate glass layers and polycarbonate sheets were cleaned, inspected, and the edges ground, the respective layers may be laminated or assembled in a stacked manner with polyurethane film layers separating adjacent borosilicate glass layers or polycarbonate sheets to form a multi-layer assembly which may be the complete lightweight ballistic glass 200 or a multi-layer portion thereof.

The multi-layer assembly or assemblies were then treated by a multi-step process in order to remove air from the interlayer region comprising the polyurethane film as well as to cause the interlayer polyurethane film layers to melt and bond adjacent borosilicate glass layers or polycarbonate sheets. First, the multi-layer assembly or assemblies were treated with a cold vacuum to remove air from between the layers. In particular, a vacuum was applied to the multi-layer assembly or assemblies at a pressure of -0.1 MPa for 2 hours, after the multi-layer assembly or assemblies were placed in a vacuum bag or container. Following the cold vacuum step, the multi-layer assembly or assemblies were placed in an autoclave at a high enough temperature to melt the polyurethane film layer or layers causing the polyurethane interlayers to bond adjacent borosilicate glass sheets or to bond an adjacent borosilicate glass sheet to a polycarbonate sheet. In particular, the autoclave was slowly heated to a maximum temperature of from about 110°C to about 130°C. The temperature was recorded every 20 minutes before the autoclave reached a temperature of 90°C and every 10 minutes thereafter. The temperature was slowly raised in the autoclave over 1-2 hours.

Following the heating step, the autoclave was pressurized while still at the 110°C to about 130°C temperature in order to expose the multi-layer assembly or assemblies to a hot vacuum. The pressure in the autoclave was slowly raised over about 1-2 hours until a maximum pressure of from about 1.1 MPa to about MPa was reached. The hot vacuum conditions were maintained for about another 1-2 hours at the maximum pressure such that the total pressurization process lasted for about 3-4 hours. Operation of the autoclave in this manner discharged additional air remaining in the interlayer region that may remain following the cold vacuum step. Following the hot vacuum step, the autoclave was allowed to slowly cool until the temperature dropped below 30°C over the course of about 3-5 hours, after which the pressure was allowed to equilibrate.

In some instances, the edges of the lightweight ballistic glass may be sealed before or after the autoclave step using a polyurethane film, including in some instances additional length or overlap of the interlayer polyurethane film layers. Additional layers may be added to the interior or exterior sides of the finished lightweight ballistic glass, such as, for example, additional film or other layers to help provide shading from the sun, or enabling trademark and other markings to be attached to the glass.

The lightweight ballistic glass **200** example depicted in **FIG. 2** was tested by two separate facilities. Testing at both facilities demonstrated that lightweight ballistic glass 200 meets the CEN 1063 Level BR6 standard. In particular, the lightweight ballistic glass **200** was demonstrated to stop three impacts of a 7.62x51mm NATO round occurring within 120 mm of each other at a range of 10.00 ± 0.5 meters, the 7.62x51mm NATO round having a full metal jacket, pointed bullet, or soft lead core projectile having a weight of 9.5 ± 0.1 grams, and when fired having a projectile velocity of 830 ±10 m/s resulting in an impact energy of 3270 Joules. Further, the lightweight ballistic glass depicted in **FIG. 2** was observed to produce no observable spalls after each impact.

Testing was conducted at an indoor range at ambient conditions (65°F/55% relative humidity/29.79 in. Hg), in accordance with the general provisions of EN 1063, Level BR6. Testing was conducted using caliber 7.62mm, 149 gr., M80 Ball ammunition. The test sample(s) were positioned 32.8 feet from the muzzle of the barrel to produce zero (0°) degree obliquity impacts. Photoelectric infrared screens were located at 23.5 feet and 26.5 feet which, in conjunction with electronic chronographs, were used to compute bullet velocities at 25.0 feet forward of the muzzle. Penetrations were determined by visual examination of the 0.0001-inch-thick aluminum foil witness plate, placed 20.0 inches behind and parallel to the test sample(s). Tables 1 and 2 provide a summary of the test data.

**Table 1: Ballistic Resistance for Sample of Lightweight Ballistic Glass According to Example 1**

| Test Sample | | | | Set-Up | | | Results | | |
|---|---|---|---|---|---|---|---|---|---|
| Sample No. | | Thickness (in.) (a) | Weight (lbs.) | Caliber | Obliquity | Shots (b) | Velocity (fps) | | Penetrations |
| | | | | | | | Max | Min | |
| 5 (M80) | | 1.473 | 29.43 | 7.62mm, M80 | 0° | 3 | 2730 | 2694 | 0 |
| | (a) Average of four (4) thickness measurements | | | | | | | | |
| | (b) Shot spacing: 3 shots on a 120mm Triangle | | | | | | | | |

**Table 2: Specific Data Records for Individual Shots During Ballistic Resistance Testing**

| Shot No. | Ammo. | Time 1 (µsec) | Velocity 1 (ft/s) | Time 2 (µsec) | Velocity 2 (ft/s) | Avg. Vel. (ft/s) | Penetration |
|---|---|---|---|---|---|---|---|
| 1 | 1 | 1115 | 2691 | 1112 | 2698 | 2694 | None |
| 2 | 1 | 1100 | 2727 | 1098 | 2732 | 2730 | None |
| 3 | 1 | 1103 | 2720 | 1102 | 2722 | 2721 | None |

## Claims

1. A lightweight ballistic glass comprising:
an exterior side comprising an exterior surface of the ballistic glass and an interior side comprising an interior surface of the ballistic glass;
a plurality of borosilicate glass layers, one of the plurality of borosilicate glass layers forming the exterior surface of the ballistic glass; and
a plurality of exterior aliphatic polyurethane film layers, each of the plurality of borosilicate glass layers separated from an adjacent borosilicate glass layer by at least one of the plurality of exterior aliphatic polyurethane film layers, each of the plurality of exterior aliphatic polyurethane layers in contact with a surface of at least one of the plurality of borosilicate glass layers;
a polycarbonate sheet having a first surface and a second surface, the second surface forming the interior surface of the ballistic glass; and
an interior aliphatic polyurethane film layer in contact with the first surface of the polycarbonate sheet, the interior aliphatic polyurethane film layer positioned to separate the first surface of the polycarbonate sheet from a surface of a borosilicate glass layer.

2. The lightweight ballistic glass according to claim 1, wherein the exterior surface of the ballistic glass is intended to be positioned so as to face the direction of incoming ballistic attack, and the interior surface of the ballistic glass is intended to face toward the interior of a compartment intended to be protected from ballistic attack by the ballistic glass.

3. The lightweight ballistic glass according to claim 1 or claim 2, wherein the lightweight ballistic glass meets the CEN 1063 Level BR6 standard.

4. The lightweight ballistic glass according to any one of claims 1-3, wherein the lightweight ballistic glass is operable to stop three impacts of a 7.62x51mm NATO round occurring within 120 mm of each other at a range of 10.00 ± 0.5 meters, the 7.62x51mm NATO round having a full metal jacket, pointed bullet, or soft lead core projectile having a weight of 9.5 ± 0.1 grams, and when fired having a projectile velocity of 830 ±10 m/s resulting in an impact energy of 3270 Joules.

5. The lightweight ballistic glass according to any one of claims 1-4, wherein the lightweight ballistic glass has a weight of no greater than about 75 kilograms per square meter (kg/m²) of exterior surface or interior surface, and the total thickness of the lightweight ballistic glass is less than about 40 mm.

6. The lightweight ballistic glass according to any one of claims 1-5, wherein each of the plurality of exterior aliphatic polyurethane film layers has a thickness of less than 2 millimeters (mm).

7. The lightweight ballistic glass according to any one of claims 1-5, wherein each of the plurality of exterior aliphatic polyurethane film layers has a thickness of from about 0.5 mm to about 0.75 mm.

8. The lightweight ballistic glass according to any one of claims 1-7, wherein the interior aliphatic polyurethane film layer is in contact with a surface of a borosilicate glass layer and the interior aliphatic polyurethane film layer has a thickness of from about 1.1 mm to about 1.4 mm.

9. The lightweight ballistic glass according to any one of claims 1-8, comprising two borosilicate glass layers each having a thickness from about 3 mm to about 5 mm and two borosilicate glass layers each having a thickness from about 11 mm to about 13 mm.

10. The lightweight ballistic glass according to any one of claims 1-9, wherein the polycarbonate sheet is a hard-coated polycarbonate sheet having a thickness of from about 4.0 mm to about 5.0 mm.

11. The lightweight ballistic glass according to claim 1, comprising:
a first borosilicate glass layer forming the exterior surface of the lightweight ballistic glass, the first borosilicate glass layer having a thickness from about 3.5 mm to about 4.5 mm;
a second borosilicate glass layer separated from the first borosilicate glass layer by a first aliphatic polyurethane film layer, the second borosilicate glass layer having a thickness from about 11.5 mm to about 12.5 mm;
a third borosilicate glass layer separated from the second borosilicate glass layer by a second aliphatic polyurethane film layer, the third borosilicate glass layer having a thickness from about 11.5 mm to about 12.5 mm;
a fourth borosilicate glass layer separated from the third borosilicate glass layer by a third aliphatic polyurethane film layer, the fourth borosilicate glass layer having a thickness from about 3.5 mm to about 4.5 mm; and
a polycarbonate sheet forming the interior surface of the lightweight ballistic glass and separated from the fourth borosilicate glass layer by a fourth aliphatic polyurethane film layer, the polycarbonate sheet having a thickness from about 4.0 mm to about 5.0 mm;
wherein the first, second, and third aliphatic polyurethane film layers have a thickness from about 0.60 mm to about 0.65 mm and the fourth aliphatic polyurethane film layer has a thickness of from about 1.1 mm to about 1.4 mm.

12. The lightweight ballistic glass according to any one of claims 1-11, wherein at least one of the plurality of borosilicate glass layers is a borosilicate glass type 3.3 as specified in international standards ISO 3585 and EN 1748 T1.

13. The lightweight ballistic glass according to any one of claims 1-11, wherein at least one of the plurality of borosilicate glass layers comprises from about 12% to about 14% by weight B₂O₃ and from about 80% to about 82% by weight SiO₂, from about 3% to about 5% by weight Na₂O or K₂O and from about 1% to about 3% by weight Al₂O₃.

14. A method of manufacturing a multi-layered lightweight ballistic glass, the method comprising assembling a multi-layered structure comprising:
a first borosilicate glass layer forming the exterior surface of the lightweight ballistic glass, the first borosilicate glass layer having a thickness from about 3.5 mm to about 4.5 mm;
a second borosilicate glass layer separated from the first borosilicate glass layer by a first aliphatic polyurethane film layer, the second borosilicate glass layer having a thickness from about 11.5 mm to about 12.5 mm;
a third borosilicate glass layer separated from the second borosilicate glass layer by a second aliphatic polyurethane film layer, the third borosilicate glass layer having a thickness from about 11.5 mm to about 12.5 mm;
a fourth borosilicate glass layer separated from the third borosilicate glass layer by a third aliphatic polyurethane film layer, the fourth borosilicate glass layer having a thickness from about 3.5 mm to about 4.5 mm; and
a polycarbonate sheet forming the interior surface of the lightweight ballistic glass and separated from the fourth borosilicate glass layer by a fourth aliphatic polyurethane film layer, the polycarbonate sheet having a thickness from about 4.0 mm to about 5.0 mm;
the first, second, and third aliphatic polyurethane film layers having a thickness from about 0.60 mm to about 0.65 mm and the fourth aliphatic polyurethane film layer having a thickness of from about 1.1 mm to about 1.4 mm.

15. The method of manufacturing a multi-layered lightweight ballistic glass according to claim 14, further comprising:
applying a cold vacuum to the multi-layered structure in order to remove air from interlayer regions between adjacent borosilicate glass layers or an adjacent borosilicate glass layer and a polycarbonate sheet, the interlayer regions comprising an aliphatic polyurethane film layer;
heating the multi-layered structure in order to cause the aliphatic polyurethane film layers to melt thereby bonding together adjacent borosilicate glass layers or an adjacent borosilicate glass layer and a polycarbonate sheet;
applying a hot vacuum to the multi-layered structure in order to remove additional remaining air from the interlayer regions;
cooling the multi-layered structure to an ambient temperature; and
removing the vacuum to produce the multi-layered lightweight ballistic glass.
